# EUROPÄISCHE PATENTSCHRIFT

(11) **EP 2 604 982 B1**
(45) Veröffentlichungstag und Bekanntmachung des Hinweises auf die Patenterteilung: **29.06.2016**
(21) Anmeldenummer: 11193614.2
(22) Anmeldetag: 14.12.2011
(51) Int. Cl.: G01F 1/66

(54) **Vorrichtung zur berührungslosen Durchflussmessung von Fluiden in flexiblen Schläuchen**
Device for contact-free throughflow measurement of fluids in flexible hoses
Dispositif de mesure de débit sans contact de fluides dans des tuyaux flexibles

(43) Veröffentlichungstag der Anmeldung: 19.06.2013
(73) Patentinhaber: Sonotec Ultraschallsensorik Halle GmbH, 06112 Halle / Saale (DE)
(72) Erfinder: Münch, Hans-Joachim, 06130 Halle/S. (DE); zur Horst-Meyer, Santer, 06120 Halle/S. (DE); Fritsche, Tobias, 06114 Halle/S. (DE); Kahle, Jürgen, 04107 Leipzig (DE); Krause, Werner, 06114 Halle/S. (DE); Bader, Nicki, 06120 Halle/S. (DE)
(74) Vertreter: Gulde & Partner

(56) Entgegenhaltungen:
- US-A1- 2004 254 469
- US-B1- 6 418 796
- Andreas Beuthner: "Sensor technology driven by usability", meditec INTERNATIONAL, 1. November 2011 (2011-11-01), Seiten 54-55, XP055020539, Gefunden im Internet: URL:http://meditec.mi-verlag.de/wp-content /uploads/2011/12/med_2011_06.pdf [gefunden am 2012-02-28]
- Anonymous: "Operators Manual - Transonic Flow Loop for Bioprocess", Transonic Systems Inc. , 31. Dezember 2009 (2009-12-31), Seiten FRONTPG.-C-36, XP002670488, Gefunden im Internet: URL:www.transonic.com/data/BP-TS410-au-EN. pdf [gefunden am 2012-02-28]

## Beschreibung

Die Erfindung betrifft eine Vorrichtung zur berührungslosen Durchflussmessung von Fluiden in flexiblen Schläuchen gemäß dem Oberbegriff des Anspruchs 1, deren Durchmesser deutlich unter 12 mm liegt. Die Messung des Durchflusses von schalltransparenten Flüssigkeiten auf nichtinvasivem Wege an flexiblen Schläuchen ist aus dem Stand der Technik bekannt und sie wird bis zu den, wie oben angeführten Durchmesserbereichen, betrieben wobei auch das Laufzeit-Differenz-Verfahren hier eine bekannte Methode darstellt, mit einer derartigen Vorrichtung zu arbeiten. Vorrichtungen zur berührungslosen Durchflussmessung von Fluiden in flexiblen Schläuchen sind zum Beispiel in Andreas Beuthner: "Sensor technology driven by usability", US 2004/254469 A1, "Operators Manual - Transonic Flow Loop for Bioprocess", Transonic Systems Inc. und US 6 418 796 B1 offenbart.

Der Stand der Technik kann beispielhaft an Produkten der Firmen em-tec GmbH, D-86923 Finning oder Transonic Systems Inc., New York 14850, USA dargelegt werden. So bietet die Firma em-tec GmbH einen Clamp-On Transducer (anklemmbaren Wandler) zur Messung eines Flusses in extrakorporalen Schlauchsystemen an, wie auf der Internetseite http:ll.em-tec.de der genannten Fa. nachlesbar ist. Mit einem Klickverschluss wird der in einem Gehäuse gelagerte Sensor an einen Schlauch geklemmt und es erfolgt die Messung somit nichtinvasiv. Anwendungen finden sich hierbei in der Medizin, z.B. bei Messungen, die an einer Herz-Lungen-Maschine in der Intensivmedizin erfolgen müssen.

Ein ähnlicher Transducer (Wandler) wird als Bypassflussmesser und Schlauchsensor von der Firma Transonic Systems Inc. genannt, wie in HT100 Bypass Flowmeter & Tubing Sensor, "SurgeiICU Products" auf der Internetseite http://.transonic.dom beschrieben.

Auch diese Lösung bedient sich eines Clamp-On-Schlauchsensors, der sterilisiert in OP-Räumen an flexible Schläuche anbringbar ist. Ein Abschnitt eines flexiblen Schlauches befindet sich hier, ohne Anwendung von äußerem mechanischem Druck, in einem Messkanal, wobei die Ultraschallsignale in Richtung mit dem Flüssigkeitsstrom oder diesem entgegen eingekoppelt werden.

Die bisher bekannten Lösungen des beispielhaft dargelegten Standes der Technik bedienen sich eines Aufbaus von Clamp-On Sensoren, bei denen Sender-/Empfängerwandler und die Auswertelektronik räumlich getrennt sind, wobei es zum Übersprechen der Signale auf der Verbindungsleitung zwischen diese kommen kann. Eine Messung an kleineren Schlauchgrößen wird bisher nicht angeboten.
Die genannten Nachteile der stellvertretend genannten Beispiele des Standes der Technik müssen daher überwunden werden.

Es ist daher Aufgabe der Erfindung, eine Vorrichtung zur berührungslosen Durchflussmessung von Fluiden für Anwendungen in der Medizin, der Industrie und anderen vorzuschlagen, bei der die schallemittierenden und -empfangenden Keramiken (Piezoelemente) in, von den übrigen Bauteilen, entkoppelter Bauweise eingebunden sind mit dem Ziel, dass sich die Signale der Keramiken gegenseitig nicht überlagern, durch den Einsatz von Komposit-Keramiken mit optimiertem Breiten-/Dickenverhältnis weniger Querschwingungen oder Richtwirkungen hervorgerufen werden und eine vergleichsweise einfache Auswerteelektronik - ohne Nutzung eines A/D-Wandlers - für die Vorrichtung zur Verfügung gestellt wird sowie der Messraum im Gehäuse der Vorrichtung als ein Messkanal so ausgebildet sein soll, dass durch Austausch weniger Bauelemente im Sinne eines Baukastenprinzips die Einlage eines flexiblen Schlauches in definiertem Bereich verwendbarer Durchmesser in den bevorzugt rechteckigen Messkanal so erfolgt, dass die Einkoppelfläche für Schallsignale in das in einem flexiblen Schlauch strömende Fluid möglichst groß ist, wobei die Bewertung von empfangenen Messsignalen - auch unter Berücksichtigung wechselnder Temperatur und einer dadurch anderen Viskosität - des durch den flexiblen Schlauch hindurch fließenden Fluids eine hohe Aussagekraft erbringen soll.

Die Aufgabe der Erfindung wird wie folgt gelöst, wobei hinsichtlich der grundlegenden erfinderischen Gedanken auf den Patentanspruch 1 verwiesen wird. Die weitere Ausgestaltung der Erfindung erfolgt gemäß der Ansprüche 2 bis 8.

Die Vorrichtung ist prinzipiell als ein Sensor zur Messung der Durchflussmenge eines schalltransparenten Mediums in einem flexiblen Schlauch geringen Durchmessers, bevorzugt in einem Durchmesserbereich von minimal 3,5 mm Außendurchmesser, in einer sogenannten Clamp-On-Ausführung ausgelegt.
Sie besteht aus einem kompakten, insbesondere Kunststoffgehäuse mit einem an ihrer Oberseite angebrachten Klappdeckel gleichen Materials, der mittels eines federbelasteten Rasthakens im geschlossenen Zustand des Gehäuses fixiert ist.

Außen am Gehäuse, gegenüber dem Verschluss des Klappdeckels gelegen, befindet sich eine Serviceschnittstelle zur Anbindung an periphere bildgebende Systeme bzw. zur Spannungsversorgung.
Bei geöffnetem Klappdeckel wird im oberen Gehäusebereich ein nach außen offener, rechteckiger Messkanal sichtbar, der über die gesamte Breite dieser Oberfläche verläuft. Seine Dimensionierung ist derart vorgenommen, dass ein flexibler Schlauch definierten Durchmessers mit leichtem mechanischen Druck in ihn einbringbar ist, wodurch die Wandung des flexiblen Schlauches bei geschlossenem Klappdeckel in Rechteckform an den Wänden des Messkanals und an der, den Messkanal von oben bedeckenden Unterseite des Klappdeckels anliegt. In der Mitte des Messkanals ist in dem das kompakte Gehäuse nach oben abschließenden oberen Gehäusebereich eine Messzelle mit paarweise, diagonal gegenüberstehenden Keramiken (Piezoelementen), die in Seitenteilen gehalten sind, vorhanden, die von unten im Bauraum des kompakten Gehäuses durch eine Grundplatte abgeschlossen ist. Die Grundplatte bildet in ihrer Durchgängigkeit dabei auch insgesamt einen den Messkanal abschließenden Boden.

Weiterhin ist ein Merkmal der Erfindung darin zu sehen, dass das Gehäuse der Vorrichtung, bezogen auf die Breite des Messkanals, mindestens doppelt so lange Wegstrecken für einen Schlauchein- und für einen -auslauf zur Einlage des flexiblen Schlauches besitzt.
Dadurch trägt ein definiert langer Schlauchein- bzw. -auslauf als Abschnitt des Messkanals zur Beruhigung des durch den flexiblen Schlauch strömenden Fluids bei, wodurch die Messstabilität verbessert wird.
Damit ein Messergebnis empfangener Signale stets ein reales Abbild des Durchflussvolumens eines schalltransparenten Fluids erbringt, muss auch die Temperatur des letzteren berücksichtigt werden, denn temperaturbedingte Viskositätsänderungen können den Durchfluss beschleunigen oder verlangsamen. Es ist daher auf einer Seite der Messzelle ein Temperaturfühler angebracht, dessen Messwerte rechnerisch als Koeffizient zur Bestimmung des Durchflussvolumens genutzt werden.

Ein hervorzuhebendes Merkmal der Erfindung ist es auch, dass der Messkanal durch den baukastenartigen Austausch der Grundplatte, welche diesen und die Messzelle bodenseitig abschließt - ohne seine Breite zu verändern - in seinem Querschnitt, ausgehend von einem Quadrat bis hin zu einem stehenden Rechteck vergrößerbar ist, wodurch in definierten Grenzen flexible Schläuche mit einem geringen Außendurchmesser, minimal ab 3,5 mm und darüber hinaus, detektiert werden können.
Dabei bleibt, bis zu einem technisch vertretbaren Maße, die Dimensionierung der Messzelle, bestehend insbesondere aus den in definiertem Abstand in den Seitenteilen eingebundenen Keramiken, unverändert. Die Keramiken sind insbesondere als Kompositkeramiken ausgeführt und es sind die einzelnen Elemente der Messzelle nicht in einem kompakten Verguss miteinander verbunden. Auch ein gemeinsamer Verguss mit der Auswerteelektronik, die sich unterhalb der Messzelle im Bauraum für Elektronikbausteine befindet, ist nicht gegeben. Mit einer derartig entkoppelten Bauweise der Vorrichtung, die auch als Miniaturisierung in dieser Größenordnung angesehen werden darf, werden negative Beeinflussungen des Übersprechens der Keramiken für das Senden und Empfangen von Messsignalen vermieden.
Zusätzlich ist zur Verbesserung der Messqualität vorgesehen, dass das kompakte Gehäuse der Vorrichtung, nebst Klappdeckel aus einem Material besteht, das gegen elektromagnetische Wellen aus der Umgebung eine Abschirmung bewirkt. Dafür eignet sich ein entsprechender Kunststoff.

Unterhalb der Messzelle befindet sich im Gehäuse der Vorrichtung ein Bauraum für Elektronikbausteine.
Er umfasst:
a) einen Multiplexer für ein Sendesignal,
b) einen Multiplexer für ein Empfangssignal,
c) einen regelbaren Verstärker für Empfangssignale in Verbindung mit einem Zero-Crossing-Komparator,
d) einen Time-to-Digital-Converter (TDC), der von einem Microcontroller (MC) konfiguriert und gesteuert ist,
e) einen Sender,
f) einen Microcontroller (MC) als zentrale Steuereinheit,
g) eine Ausgangsschaltung,
h) eine Serviceschnittstelle und
i) eine Betriebsspannungsversorgung.

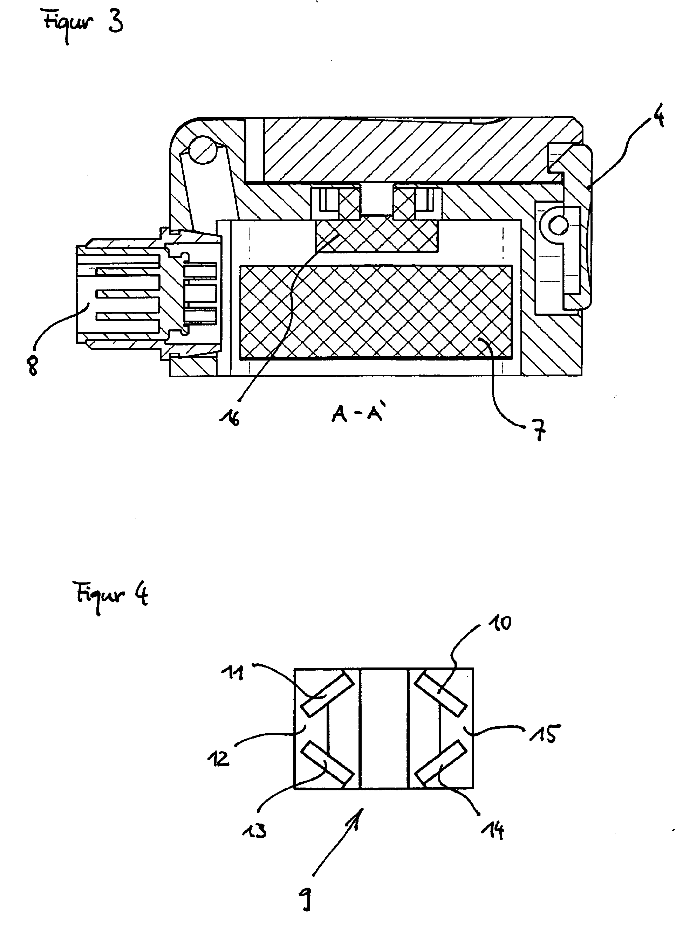

Die Erfindung soll nachfolgend anhand eines Ausführungsbeispiels näher erläutert werden. Dazu wird auf die Figuren 1 bis 6 verwiesen.

Es zeigen:
- Figur 1: eine perspektivische Darstellung der Vorrichtung mit geschlossenem Deckel,
- Figur 2: Aufsicht von oben gemäß Figur 1,
- Figur 3: Längsschnitt A-A gemäß Figur 1,
- Figur 4: Messzelle in Aufsicht,
- Figur 5: Seitenansicht von links mit Teilschnitt Messzelle und
- Figur 6: Lage der Keramiken und Blockbild für die elektronischen Bausteine der Vorrichtung.

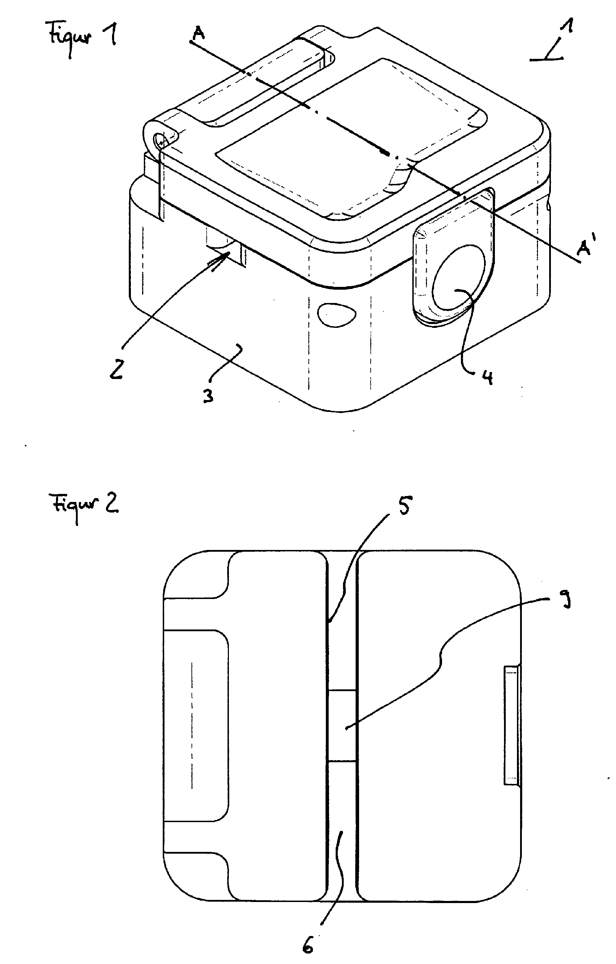

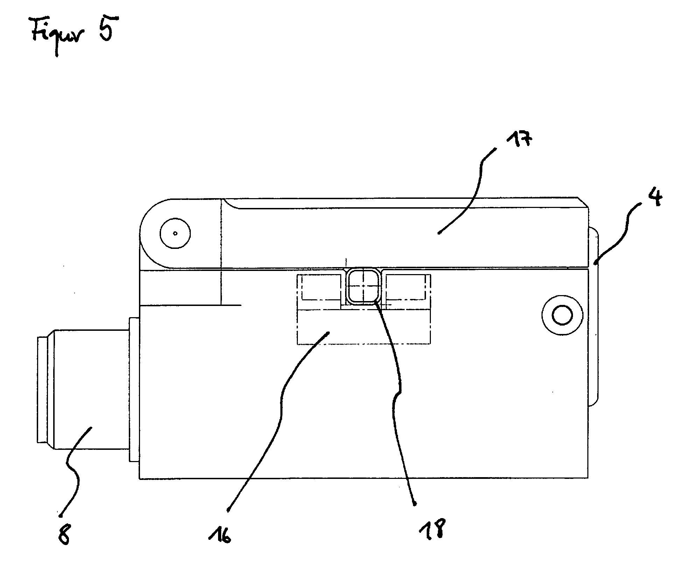

Nach Figur 1 ist die Vorrichtung als ein Sensor 1 mit kompaktem Gehäuse 3 mit geschlossenem Klappdeckel 17 dargestellt, wobei jeweils links und rechts unter dem Klappdeckel 17 im oberen Bereich der Seitenwände des Gehäuses 3 ein Schlauchein- bzw. ein Schlauchauslauf 5, 6 in definierter Länge ins Innere des Gehäuses 3 führend, einen Messkanal 2 bildet. Der Messkanal 2 hat in dieser Ausführungsform einen quadratischen Querschnitt, an welchem sich ein flexibler Schlauch 18 mittels leichten mechanischen Drucks beim Schließen des Klappdeckels 17 anlegt. Dadurch wird eine möglichst große Einkoppelfläche für die Schallsignale in ein durch den flexiblen Schlauch 18 strömendes Fluid generiert. Die Verformung des flexiblen Schlauches 18 wird nach Figur 5 verdeutlicht.

In Figur 2 ist in Aufsicht die Länge des Messkanals 2 mit Schlauchein- bzw. -auslauf 5, 6 zu sehen, wobei zentral mittig im Messkanal 2 gelegen, die Messzelle 9 angeordnet ist. Die Messzelle 9 besteht aus paarweise, jeweils in einem Seitenteil, links und einem Seitenteil, rechts 12, 15 eingesetzten Keramiken, das heißt Piezoelementen, Keramik I bis IV; 10, 11, 13, 14, die als Sende- und Empfangselemente für die Schallsignale dienen. Den Abschluss der Messzelle nach unten bildet eine, sowie auch den Messkanal 2 von unten her, variabel bezüglich ihrer Dicke einsetzbare Grundplatte 16. Unter dem Messkanal 2 bzw. der Messzelle 9 befindet sich ein Bauraum für eine Auswerteelektronik 7, die ihrerseits über einen Sensoranschluss 8 mit peripher und nicht weiter dargestellten bildgebenden Systemen und einer Betriebsspannungsversorgung 25 verbunden ist.

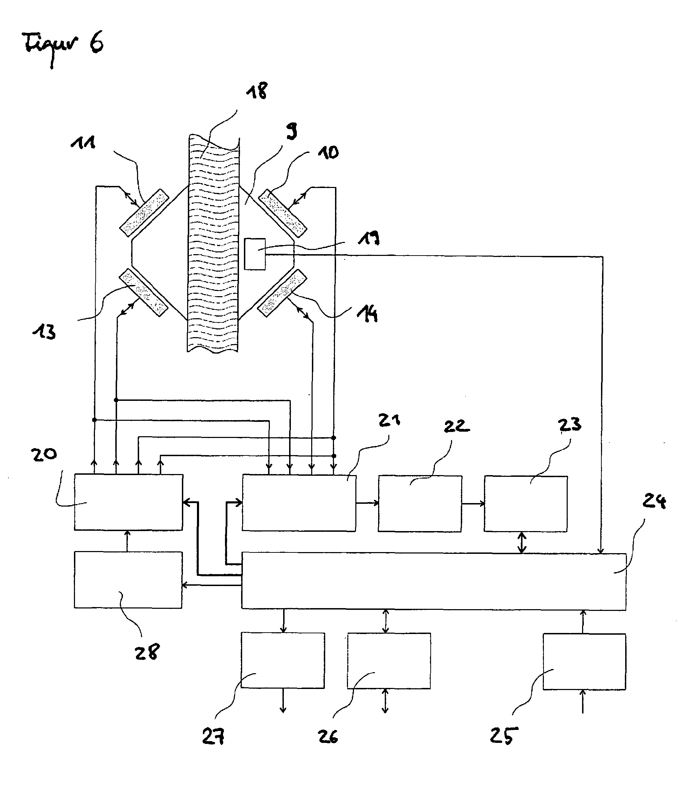

Nach Figur 6 ist in schematischer Darstellung abgebildet, wie die Messzelle 9 mit der Auswerteelektronik 7 in Wirkverbindung steht und welche Bausteine die Auswerteelektronik 7 umfasst. Es sind in dieser Ausführung insbesondere ein Multiplexer Sendesignal 20, ein Multiplexer Empfangssignal 21, ein Verstärker Empfangssignal 22, ein TDC 23, ein Microcontroller 24, eine Betriebsspannungsversorgung 25, eine Serviceschnittstelle 26, eine Ausgangsschaltung 27 und ein Sender für US-Signale 28 vorgesehen.
Die Bauweise der Messzelle 9 und der Bauteile der Auswerteelektronik 7 ist eine entkoppelte, das heißt ein kompakter Verguss aller Bauteile findet nicht statt. Dadurch wird ein Übersprechen, wie bereits dargelegt, der Sende- und Empfangssignale verhindert und es wird die Qualität der Detektion verbessert.

Die Vorteile der Erfindung werden zusammenfassend darin gesehen:
- entkoppelte Bauweise der Bauteile der Messzelle,
- variabel veränderbarer Querschnitt des Messkanals für mehrere flexible Schlauchdurchmesser in definierten Grenzen,
- Messungen an flexiblen Schläuchen mit geringem Außendurchmesser ab 3,5 mm gegeben,
- gegen Einflüsse aus der Umgebung optimaler Schutz des Sensors mittels abgeschirmtem Gehäuse.

### Bezugszeichenliste

- 1: Sensor
- 2: Messkanal
- 3: Gehäuse
- 4: Rasthaken
- 5: Schlaucheinlauf
- 6: Schlauchauslauf
- 7: Auswerteelektronik
- 8: Sensoranschluss
- 9: Messzelle
- 10: Keramik I
- 11: Keramik II
- 12: Seitenteil, links
- 13: Keramik III
- 14: Keramik IV
- 15: Seitenteil, rechts
- 16: Grundplatte
- 17: Klappdeckel
- 18: flexibler Schlauch
- 19: Temperaturfühler (-sensor)
- 20: Multiplexer Sendesignal
- 21: Multiplexer Empfangssignal
- 22: Verstärker Empfangssignal
- 23: TDC
- 24: Microcontroller
- 25: Betriebsspannungsversorgung
- 26: Serviceschnittstelle
- 27: Ausgangsschaltung
- 28: Sender für US-Signale

## Patentansprüche

1. Vorrichtung zur berührungslosen Durchflussmessung von Fluiden in flexiblen Schläuchen (18) mittels Ultraschall, bestehend aus einem kompakten Gehäuse (3) mit einem fixierbaren Klappdeckel (17), wobei sich unter dem Klappdeckel (17) ein Messkanal (2) zur Einlage eines flexiblen Schlauches (18) befindet, wobei
das Gehäuse (3) der Vorrichtung, bezogen auf die Breite des Messkanals (2), mindestens doppelt so lange Wegstrecken für einen Schlaucheinlauf (5) und für einen Schlauchauslauf (6) zur Einlage des flexiblen Schlauches (18) besitzt, und
sich eine Messzelle (9) zwischen dem Schlaucheinlauf (5) und dem Schlauchauslauf (6) im Messkanal (2), der einen rechteckigen Querschnitt aufweist, befindet, wobei der Messkanal (2) über seine gesamte Länge unter dem Klappdeckel (17) verläuft und die Messzelle (9) umfasst:
vier paarweise diagonal gegenüberliegend und schallentkoppelte Keramiken I, II, III, IV (10, 11, 13, 14), das heißt Piezoelemente, die als Sende- und Empfangselemente für Schallsignale dienen, die in Seitenteilen (12, 15) des Gehäuses (3) links und rechts der Messzelle (9) gelagert sind, **gekennzeichnet durch** eine einen Boden des Messkanals (2) bildende und dem Klappendeckel (17) gegenüberliegende Grundplatte (16), wobei die Grundplatte (16) austauschbar ist.

2. Vorrichtung zur berührungslosen Durchflussmessung von Fluiden nach Anspruch 1,
**gekennzeichnet dadurch, dass**
die Grundplatte (16) und der Messkanal (2) zwischen dem Klappdeckel (17) und einer Auswerteelektronik (7) der Vorrichtung angeordnet sind.

3. Vorrichtung zur berührungslosen Durchflussmessung von Fluiden nach Anspruch 1 oder 2,
**gekennzeichnet dadurch, dass**
auf einer Seite des Messkanals (2), neben der Messzelle (9), ein Temperaturfühler (19) angebracht ist.

4. Vorrichtung zur berührungslosen Durchflussmessung von Fluiden nach einem der vorhergehenden Ansprüche,
**gekennzeichnet dadurch, dass**
die Grundplatte (16) im Baukastenprinzip austauschbar ausgebildet ist und damit eine Veränderung der Geometrie des Messkanals (2) bezüglich seines Querschnitts von der Form eines Quadrates bis hin zur Form eines stehenden Rechteckes ausführbar ist.

5. Vorrichtung zur berührungslosen Durchflussmessung von Fluiden nach einem der vorhergehenden Ansprüche,
**gekennzeichnet dadurch, dass**
das kompakte Gehäuse (3) nebst Klappdeckel (17) aus einem Material besteht, das gegen elektromagnetische Wellen aus der Umgebung eine abschirmende Wirkung besitzt.

6. Vorrichtung zur berührungslosen Durchflussmessung von Fluiden nach Anspruch 5,
**gekennzeichnet dadurch, dass**
als Material für das Gehäuse (3) und für den Klappdeckel (17) PMMA verwendet wird.

7. Vorrichtung zur berührungslosen Durchflussmessung von Fluiden nach Anspruch 1 oder Anspruch 4,
**gekennzeichnet dadurch, dass**
der Außendurchmesser eines in den Messkanal (2) einlegbaren und von einem Fluid durchströmten flexiblen Schlauches (18) minimal 3,5 mm beträgt sowie bei gleichbleibender Breite des Messkanals (2) mittels Veränderung seines Querschnitts zur Rechteckform auch ein flexibler Schlauch (18) definiert größeren Außendurchmessers in ihn einlegbar ist.

8. Vorrichtung zur berührungslosen Durchflussmessung von Fluiden nach einem der vorhergehenden Ansprüche,
**gekennzeichnet dadurch, dass**
die Auswerteelektronik umfasst:
a) einen Multiplexer für ein Sendesignal (20),
b) einen Multiplexer für ein Empfangssignal (21),
c) einen regelbaren Verstärker für Empfangssignale in Verbindung mit einem Zero-Crossing-Korüparator,
d) einen Time-to-Digital-Converter (TDC) (23), der von einem Microcontroller (MC) konfiguriert und gesteuert ist,
e) einen Sender (28),
f) einen Microcontroller (MC) (24) als zentrale Steuereinheit,
g) eine Ausgangsschaltung (27),
h) eine Serviceschnittstelle (26) und
i) eine Betriebsspannungsversorgung (25).

## Claims

1. Device for contact-free flow rate measurement of fluids in flexible hoses (18) by means of ultrasound, consisting of a compact housing (3) having a fixable hinged cover (17), wherein a measuring channel (2) for inserting a flexible hose (18) is located under the hinged cover (17), wherein
the housing (3) of the device has at least doubly as long distances, with respect to the width of the measuring channel (2), for a hose inlet (5) and for a hose outlet (6) for inserting the flexible hose (18), and
a measuring cell (9) is located between the hose inlet (5) and the hose outlet (6) in the measuring channel (2), which has a rectangular cross-section, wherein the measuring channel (2) extends over its entire length under the hinged cover (17) and the measuring cell (9) includes:
four acoustically decoupled ceramics I, II, III, IV (10, 11, 13, 14), which are located diagonally opposite in pairs, i.e. piezo elements, which serve as transmitting and receiving elements for acoustic signals, which are mounted in side parts (12, 15) of the housing (3) to the left and right of the measuring cell (9), **characterized by** a base plate (16) forming a bottom of the measuring channel (2) and located opposite the hinged cover (17), wherein the base plate (16) is exchangeable.

2. Device for contact-free flow rate measurement of fluids according to claim 1, **characterized in that**
the base plate (16) and the measuring channel (2) are located between the hinged cover (17) and an evaluation electronic unit (7) of the device.

3. Device for contact-free flow rate measurement of fluids according to claim 1 or 2, **characterized in that**
a temperature probe (19) is mounted on one side of the measuring channel (2), adjacent to the measuring cell (9).

4. Device for contact-free flow rate measurement of fluids according to one of the preceding claims,
**characterized in that**
the base plate (16) is configured to be exchangeable according to the modular principle and therefore a modification of the geometry of the measuring channel (2) in terms of its cross-section from the form of a square into the form of a vertical rectangle can be accomplished.

5. Device for contact-free flow rate measurement of fluids according to one of the preceding claims,
**characterized in that**
the compact housing (3), as well as the hinged cover (17), consists of a material, which has a shielding effect against electromagnetic waves from the surroundings.

6. Device for contact-free flow rate measurement of fluids according to claim 5, **characterized in that**
PMMA is used as the material for the housing (3) and for the hinged cover (17).

7. Device for contact-free flow rate measurement of fluids according to claim 1 or claim 4, **characterized in that**
the external diameter of a flexible hose (18) insertable into the measuring channel (2) and flown through by a fluid is a minimum of 3.5 mm and, at constant width of the measuring channel (2), by means of changing its cross-section to the rectangular form, a flexible hose (18) of a defined larger external diameter is insertable.

8. Device for contact-free flow rate measurement of fluids according to one of the preceding claims,
**characterized in that**
the evaluation electronic unit includes:
a) a multiplexer for a transmit signal (20),
b) a multiplexer for a receive signal (21),
c) an adjustable amplifier for receive signals in connection with a zero crossing comparator,
d) a time-to-digital converter (TDC) (23), which is configured and controlled by a microcontroller (MC),
e) a transmitter (28),
f) a microcontroller (MC) (24) as a central control unit,
g) an output circuit (27),
h) a service interface (26) and
i) an operating voltage supply (25).

## Revendications

1. Dispositif de mesure de débit sans contact de fluides dans des tuyaux (18) flexibles au moyen d'ultrasons, composé d'un boîtier (3) compact avec un couvercle rabattable (17) pouvant être fixé, une gaine de mesure (2) étant située sous le couvercle rabattable (17) pour l'insertion d'un tuyau (18) flexible,
le boîtier (3) du dispositif possédant, rapporté à la largeur de la gaine de mesure (2), des tronçons au moins deux fois plus longs pour une arrivée de tuyau (5) et pour une sortie de tuyau (6) pour l'insertion du tuyau (18) flexible, et
une cellule de mesure (9) étant située entre l'arrivée de tuyau (5) et la sortie de tuyau (6) dans la gaine de mesure (2) qui présente une section transversale rectangulaire, la gaine de mesure (2) passant sur toute sa longueur sous le couvercle rabattable (17), et la cellule de mesure (9) comprenant :
quatre céramiques I, II, III, IV (10, 11, 13, 14) diagonalement opposées par paires et acoustiquement découplées, c'est-à-dire des éléments piézoélectriques qui servent d'éléments d'émission et de réception pour des signaux acoustiques, qui sont supportées dans les parties latérales (12, 15) du boîtier (3) à gauche et à droite de la cellule de mesure (9), **caractérisé par** une plaque de base (16) formant un fond de la gaine de mesure (2) et opposée au couvercle rabattable (17), la plaque de base (16) étant remplaçable.

2. Dispositif de mesure de débit sans contact de fluides selon la revendication 1, **caractérisé en ce que**
la plaque de base (16) et la gaine de mesure (2) sont disposées entre le couvercle rabattable (17) et une électronique d'analyse du dispositif.

3. Dispositif de mesure de débit sans contact de fluides selon la revendication 1 ou 2, **caractérisé en ce**
**qu'**une sonde de température (19) est mise en place sur un côté de la gaine de mesure (2), près de la cellule de mesure (9).

4. Dispositif de mesure de débit sans contact de fluides selon l'une des revendications précédentes,
**caractérisé en ce que**
la plaque de base (16) est constituée de façon remplaçable selon le principe modulaire, et ainsi une modification de la géométrie de la gaine de mesure (2) en ce qui concerne sa section transversale peut être réalisée pour passer de la forme d'un carré à la forme d'un rectangle debout.

5. Dispositif de mesure de débit sans contact de fluides selon l'une des revendications précédentes,
**caractérisé en ce que**,
outre le couvercle rabattable (17), le boîtier (3) compact se compose d'un matériau qui possède un effet de blindage contre les ondes électromagnétiques en provenance de l'environnement.

6. Dispositif de mesure de débit sans contact de fluides selon la revendication 5, **caractérisé en ce que**
du PMMA est utilisé en tant que matériau pour le boîtier (3) et- pour le couvercle rabattable (17).

7. Dispositif de mesure de débit sans contact de fluides selon la revendication 1 ou la revendication 4,
**caractérisé en ce que**,
le diamètre extérieur d'un tuyau (18) flexible pouvant être inséré dans la gaine de mesure (2) et parcouru par un fluide est au minimum égal à 3,5 mm, et **en ce que**, pour une largeur constante de la gaine de mesure (2), même un tuyau (18) flexible ayant un diamètre extérieur nettement plus grand peut être introduit dans la gaine au moyen d'une modification de sa section transversale en forme rectangulaire.

8. Dispositif de mesure de débit sans contact de fluides selon l'une des revendications précédentes,
**caractérisé en ce que**
l'électronique d'analyse comprend :
a) un multiplexeur pour un signal d'émission (20),
b) un multiplexeur pour un signal de réception (21),
c) un amplificateur réglable pour signaux de réception en liaison avec un comparateur zero-crossing,
d) un Time-to-Digital-Converter (TDC) (23), qui est configuré et commandé par un microcontrôleur (MC),
e) un émetteur (28),
f) un microcontrôleur (MC) (24) en tant qu'unité de commande centrale,
g) un circuit de sortie (27),
h) une interface de service (26) et
i) une alimentation en tension de service (25).
